(19) Europäisches Patentamt
European Patent Office
Office européen des brevets

(11) **EP 3 783 570 B1**

(12) **EUROPÄISCHE PATENTSCHRIFT**

(45) Veröffentlichungstag und Bekanntmachung des Hinweises auf die Patenterteilung:
**17.05.2023 Patentblatt 2023/20**

(21) Anmeldenummer: **19193250.8**

(22) Anmeldetag: **23.08.2019**

(51) Internationale Patentklassifikation (IPC):
***G06T 11/00*** *(2006.01)*

(52) Gemeinsame Patentklassifikation (CPC):
**G06T 11/006;** G06T 2211/412; G06T 2211/424

(54) **COMPUTERIMPLEMENTIERTES VERFAHREN ZUR REKONSTRUKTION VON MEDIZINISCHEN BILDDATEN**

COMPUTER-IMPLEMENTED METHOD FOR RECONSTRUCTING MEDICAL IMAGE DATA

PROCÉDÉ MIS EN OEUVRE PAR ORDINATEUR DESTINÉ À LA RECONSTRUCTION DES DONNÉES D'IMAGE MÉDICALES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**24.02.2021 Patentblatt 2021/08**

(73) Patentinhaber: **Siemens Healthcare GmbH 91052 Erlangen (DE)**

(72) Erfinder: **Manhart, Michael 90765 Fürth (DE)**

(56) Entgegenhaltungen:
- SISNIEGA A ET AL: "Motion compensation in extremity cone-beam CT using a penalized image sharpness criterion", PHYSICS IN MEDICINE AND BIOLOGY, INSTITUTE OF PHYSICS PUBLISHING, BRISTOL GB, Bd. 62, Nr. 9, 6. April 2017 (2017-04-06), Seiten 3712-3734, XP020316104, ISSN: 0031-9155, DOI: 10.1088/1361-6560/AA6869 [gefunden am 2017-04-06]
- UNBERATH M ET AL: "Prior-Free Respiratory Motion Estimation in Rotational Angiography", IEEE TRANSACTIONS ON MEDICAL IMAGING IEEE USA, Bd. 37, Nr. 9, September 2018 (2018-09), Seiten 1999-2009, XP055657812, ISSN: 0278-0062
- OUADAH S ET AL: "Correction of patient motion in cone-beam CT using 3D-2D registration", PHYSICS IN MEDICINE AND BIOLOGY, INSTITUTE OF PHYSICS PUBLISHING, BRISTOL GB, Bd. 62, Nr. 23, 9. November 2017 (2017-11-09), Seiten 8813-8831, XP020322340, ISSN: 0031-9155, DOI: 10.1088/1361-6560/AA9254 [gefunden am 2017-11-09]

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein computerimplementiertes Verfahren zur Rekonstruktion von medizinischen Bilddaten, ein Computerprogramm, einen Datenspeicher und ein medizinisches Bildgebungsgerät.

Zur Analyse und Auswertung medizinischer Bilddaten von einem Untersuchungsobjekt ist eine hohe Bildqualität unerlässlich. Häufig werden zunächst medizinische Messdaten, insbesondere Rohdaten, von dem Untersuchungsobjekt mittels eines medizinischen Bildgebungsgeräts aufgenommen, beispielsweise einer Magnetresonanzanlage und/oder eines Röntgengeräts und/oder einer Computertomographieanlage. Im Anschluss erfolgt häufig eine Rekonstruktion der medizinischen Bilddaten aus den medizinischen Messdaten. Dabei ist eine hohe Konsistenz und genaue Kenntnis der Aufnahmeparameter, beispielsweise einer Aufnahmegeometrie, zur artefaktfreien Rekonstruktion der medizinischen Bilddaten erforderlich.

In rekonstruierten medizinischen Bilddaten können Artefakte beispielsweise durch Inkonsistenzen zwischen Aufnahmeparametern zur Aufnahme der medizinischen Messdaten und Rekonstruktionsparametern zur Rekonstruktion der medizinischen Bilddaten auftreten. Ferner kann beispielsweise eine Bewegung des Untersuchungsobjekts zu Bildartefakten nach Rekonstruktion der medizinischen Bilddaten führen.

Zur Verbesserung der Bildqualität von zu rekonstruierenden medizinischen Bilddaten sind aus dem Stand der Technik beispielsweise Verfahren zur prospektiven und/oder retrospektiven Bewegungskorrektur bekannt. Dabei können die bekannten Verfahren jedoch häufig keine Inkonsistenzen zwischen Aufnahme- und Rekonstruktionsparametern korrigieren.

Weiterhin sind aus dem Stand der Technik Verfahren zur Verbesserung der Bildqualität von zu rekonstruierenden medizinischen Bilddaten basierend auf Bildqualitätsmetriken bekannt. Hierbei ist häufig der hohe Rechenaufwand zur Optimierung der Bildqualität und die geringe Stabilität nachteilig.

Die Druckschrift von Sisniega et al., "Motion compensation in extremity cone-beam CT using a penalized image sharpness criterion", Physics in Medicine and Biology, Institute of Physics Publishing, Bristol (GB), Bd. 62 (9), S. 3712-3734, offenbart ein Optimierungsverfahren zur bewegungskompensierten Rekonstruktion von medizinischen Bilddaten durch Abschätzung einer Bewegungstrajektorie.

Der Erfindung liegt daher die Aufgabe zugrunde, die Qualität von zu rekonstruierenden medizinischen Bilddaten recheneffizient und zuverlässig zu verbessern.

Die Aufgabe wird erfindungsgemäß gelöst durch ein computerimplementiertes Verfahren zur Rekonstruktion von medizinischen Bilddaten, ein Computerprogramm, einen Datenspeicher, sowie ein medizinisches Bildgebungsgerät gemäß der unabhängigen Ansprüche. Vorteilhafte Ausführungsformen mit zweckmäßigen Weiterbildungen sind Gegenstand der Unteransprüche.

Danach ist vorgesehen, dass medizinische Messdaten empfangen werden. Ferner wird ein Kostenwert durch Gradientenabstieg mehrere Schritte umfassend minimiert. In einem ersten Schritt a) werden die medizinischen Bilddaten mehrere Bildwerte umfassend durch Anwendung einer Rekonstruktionsfunktion auf die empfangenen medizinischen Messdaten gemäß Rekonstruktionsparametern rekonstruiert. Hiernach wird in einem zweiten Schritt b) ein Kostenwert durch Anwendung einer Kostenfunktion auf die rekonstruierten medizinischen Bilddaten bestimmt. In einem dritten Schritt c) wird ein Gradient der Kostenfunktion bezüglich der Rekonstruktionsparameter bestimmt. Ferner werden die Rekonstruktionsparameter in einem vierten Schritt d) angepasst. Dabei basiert die Anpassung der Rekonstruktionsparameter einerseits auf dem Gradienten der Kostenfunktion bezüglich der Rekonstruktionsparameter und andererseits auf den bisherigen Rekonstruktionsparametern. In einem fünften Schritt e) werden die angepassten Rekonstruktionsparameter bereitgestellt. Zur Minimierung des Kostenwertes durch Gradientenabstieg werden die Schritte a) bis e), insbesondere iterativ, bis zum Eintreten einer Abbruchbedingung wiederholt. Hiernach werden die rekonstruierten medizinischen Bilddaten aus Schritt a) bereitgestellt.

Vorteilhafterweise werden die zuletzt im Schritt a) rekonstruierten medizinischen Bilddaten bereitgestellt. Dabei kann das Bereitstellen der rekonstruierten medizinischen Bilddaten insbesondere ein Speichern auf einem computerlesbaren Speichermedium und/oder ein Anzeigen auf einer Darstellungseinheit und/oder ein Übertragen an eine Verarbeitungseinheit umfassen.

Ferner können die medizinischen Messdaten insbesondere mittels eines medizinischen Bildgebungsgeräts von einem Untersuchungsobjekt aufgenommen und/oder bereitgestellt werden. Dabei kann das Untersuchungsobjekt beispielsweise einen tierischen Patienten und/oder einen menschlichen Patienten und/oder ein Phantom und/oder ein Modell umfassen.

Das medizinische Bildgebungsgerät kann beispielsweise als medizinisches Röntgengerät, insbesondere als C-Bogen-Röntgengerät und/oder Dyna-CT, und/oder Magnetresonanzanlage (MRT) und/oder Computertomographieanlage (CT) und/oder Ultraschallgerät ausgebildet sein.

Die medizinischen Messdaten können insbesondere mehrere medizinische Rohdaten umfassen. Dabei können die mehreren medizinischen Rohdaten vorteilhafterweise jeweils zu einer Aufnahmegeometrie korrespondieren, beispielsweise einem Projektionswinkel und/oder Abbildungswinkel. Ferner können die medizinischen Messdaten beispielweise im Frequenzraum, insbesondere k-Raum, aufgenommen und/oder bereitgestellt werden.

Zudem können die mehreren medizinischen Rohdaten insbesondere in zeitlicher Abfolge von dem Untersuchungsobjekt aufgenommen werden. Beispielsweise können die medizinischen Messdaten mehrere, insbesondere mit zueinander zumindest teilweise verschiedener Aufnahmegeometrie aufgenommene, Schichtbilder und/oder Projektionsröntgenbilder umfassen. Ferner können die medizinischen Messdaten in zeitlicher Abfolge aufgenommene Einzelbilder und/oder Zustandsbilder einer physiologischen Szene umfassen.

Des Weiteren können die medizinischen Messdaten vorteilhafterweise Metadaten umfassen. Dabei können die Metadaten eine Information zu Aufnahmeparametern und/oder Betriebsparametern des medizinischen Bildgebungsgeräts umfassen.

Das Empfangen der medizinischen Messdaten kann insbesondere ein Erfassen und/oder Auslesen eines computerlesbaren Datenspeicher und/oder ein Empfangen aus einer Datenspeichereinheit, beispielsweise einer Datenbank, umfassen. Ferner können die medizinischen Messdaten von einer Verarbeitungseinheit des medizinischen Bildgebungsgeräts bereitgestellt werden.

Ferner können die medizinischen Bilddaten durch Anwendung der Rekonstruktionsfunktion auf die empfangenen medizinischen Messdaten gemäß der Rekonstruktionsparameter rekonstruiert werden. Dabei kann die Rekonstruktionsfunktion insbesondere eine Abbildung zwischen den empfangenen medizinischen Messdaten aus einer Dimension und/oder einer Domäne und/oder einem Raum der medizinischen Messdaten in eine Dimension und/oder eine Domäne und/oder einen Raum der medizinischen Bilddaten umfassen. Dabei kann die Rekonstruktionsfunktion beispielsweise eine Fouriertransformation und/oder eine Radontransformation und/oder eine gefilterte Rückprojektion umfassen.

Die Rekonstruktionsparameter können dabei insbesondere als Argumente und/oder Eingangsparameter der Rekonstruktionsfunktion berücksichtigt werden. Dabei können die Rekonstruktionsparameter vorteilhafterweise Aufnahmeparameter,

beispielsweise eine Akquisitionsgeometrie und/oder eine Positionierungsinformation und/oder eine Ausrichtungsinformation, und/oder Betriebsparameter des medizinischen Bildgebungsgeräts, beispielsweise Sequenzparameter, umfassen. Vorteilhafterweise ist die Rekonstruktionsfunktion nach den Rekonstruktionsparametern, insbesondere stetig, differenzierbar.

Des Weiteren können die rekonstruierten medizinischen Bilddaten im zugehörigen Bildraum eine gegenüber den medizinischen Messdaten eine höhere Dimensionalität aufweisen. Ferner kann die Rekonstruktionsfunktion eine Abbildung zwischen den medizinischen Messdaten im Frequenzraum, insbesondere k-Raum, und den medizinischen Bilddaten im Bildraum umfassen.

Vorteilhafterweise können die medizinischen Bilddaten mehrere Bildwerte, insbesondere Pixel und/oder Voxel, umfassen. Dabei kann eine räumliche Auflösung der medizinischen Bilddaten durch die Rekonstruktionsparameter und/oder die Aufnahmeparameter und/oder die medizinischen Messdaten vorgegeben und/oder begrenzt sein. Vorteilhafterweise umfassen die medizinischen Bilddaten eine Abbildung zumindest eines Ausschnitts des Untersuchungsobjekts.

Der Kostenwert kann einen Wert zur, insbesondere normierten, Bewertung einer Bildqualität der rekonstruierten medizinischen Bilddaten umfassen. Dabei kann die Kostenfunktion vorteilhafterweise die rekonstruierten medizinischen Bilddaten, insbesondere die Bildwerte, als Eingangsdaten auf den Kostenwert abbilden. Der Kostenwert kann dabei als Skalar ausgebildet sein. Ferner kann die Kostenfunktion vorteilhafterweise zur Bewertung eines Signal-zu-Rausch-Verhältnisses und/oder eines Rückprojektionsfehlers und/oder einer Bewegungskompensation und/oder einer Ausprägung eines Bildartefakts in den rekonstruierten medizinischen Bilddaten ausgebildet sein.

Die Bestimmung des Gradienten der Kostenfunktion bezüglich der Rekonstruktionsparameter im Schritt c) kann vorteilhafterweise eine Bestimmung von partiellen Ableitungen der Kostenfunktion bezüglich der Rekonstruktionsparameter umfassen. Dabei kann der Gradient der Kostenfunktion bezüglich der Rekonstruktionsparameter vorteilhafterweise als Vektor ausgebildet sein.

Die Anpassung der Rekonstruktionsparameter im Schritt d) kann vorteilhafterweise eine Addition und/oder Multiplikation der bisherigen Rekonstruktionsparameter und dem, insbesondere skalierten, Gradienten der Kostenfunktion bezüglich der Rekonstruktionsparameter umfassen. Dabei beschreiben die bisherigen Rekonstruktionsparameter insbesondere die zur Rekonstruktion der medizinischen Bilddaten im Schritt a) verwendeten Rekonstruktionsparameter. Durch eine Skalierung des Gradienten der Kostenfunktion bezüglich der Rekonstruktionsparameter kann vorteilhafterweise eine Anpassung der Minimierungsgeschwindigkeit der Minimierung des Kostenwertes ermöglicht werden. Durch das Anpassen der Rekonstruktionsparameter basierend auf dem Gradienten der Kostenfunktion bezüglich der Rekonstruktionsparameter kann vorteilhafterweise eine Verringerung des Kostenwertes ermöglicht werden.

Im Schritt e) können die im Schritt d) angepassten Rekonstruktionsparameter für Schritt a) zur wiederholten Rekonstruktion der medizinischen Bilddaten aus den medizinischen Messdaten bereitgestellt werden. Dabei kann das Bereitstellen der angepassten Rekonstruktionsparameter insbesondere ein Speichern auf einem computerlesbaren Speichermedium und/oder ein Anzeigen auf einer Darstellungseinheit und/oder ein Übertragen an eine Verarbeitungs-

3

einheit umfassen.

Vorteilhafterweise kann der Kostenwert durch wiederholte, insbesondere iterative, Ausführung der Schritte a) bis e) unter Anpassung der Rekonstruktionsparameter in jeder Wiederholung, insbesondere Iteration, minimiert werden. Dabei kann die Anpassung der Rekonstruktionsparameter insbesondere basierend auf dem Gradienten der Kostenfunktion bezüglich der Rekonstruktionsparameter gerichtet zur Minimierung des Kostenwertes erfolgen.

Vorteilhafterweise kann hierdurch eine besonders schnelle, insbesondere recheneffiziente, und stabile Minimierung des Kostenwertes ermöglicht werden. Insbesondere durch die Anpassung der Rekonstruktionsparameter basierend auf dem Gradienten der Kostenfunktion bezüglich der Rekonstruktionsparameter kann eine gerichtete und stabile Minimierung des Kostenwertes erreicht werden.

Das dabei zugrundeliegende mathematische Optimierungsverfahren ist aus dem Stand der Technik als Gradientenabstieg und/oder Gradientenabstiegsverfahren bekannt.

In einer weiteren vorteilhaften Ausführungsform des vorgeschlagenen Verfahrens kann die Abbruchbedingung eine maximale Anzahl von Wiederholungen und/oder einen Schwellwert bezüglich des Kostenwertes umfassen. Dabei kann die Abbruchbedingung vorteilhafterweise bei Erreichen und/oder Überschreiten der maximalen Anzahl von Wiederholungen der Schritte a) bis e) und/oder bei Erreichen und/oder Unterschreiten des Schwellwertes bezüglich des Kostenwertes eintreten. Durch Vorgabe eines Schwellwertes bezüglich des Kostenwertes als Abbruchbedingung kann vorteilhafterweise eine Bildqualität, insbesondere eine Mindestbildqualität, für die rekonstruierten medizinischen Bilddaten vorgegeben werden. Dabei kann der Schwellwert bezüglich des Kostenwertes vorteilhafterweise derart vorgegeben werden, dass die dazu korrespondierende Bildqualität der rekonstruierten medizinischen Bilddaten zur diagnostischen Unterstützung eines medizinischen Bedienpersonals geeignet ist. Ferner kann durch Vorgabe einer maximalen Anzahl von Wiederholungen als Abbruchbedingung eine Begrenzung der Laufzeit des vorgeschlagenen computerimplementierten Verfahrens ermöglicht werden. Dies kann insbesondere in einem klinischen Umfeld vorteilhaft sein.

Die Kostenfunktion basiert auf einer Bildqualitätsmetrik. Dabei kann die Bildqualitätsmetrik beispielsweise eine Regression eines Rückprojektionsfehlers, insbesondere bei einer Bewegungskorrektur, umfassen. Ferner kann die Bildqualitätsmetrik zur Bewertung der Bildqualität bezüglich einer Röntgenstrahlaufhärtung und/oder eines Signal-zu-Rauschverhältnisses und/oder einer Ausprägung von Bildartefakten, beispielsweise Metallartefakten, ausgebildet sein. Des Weiteren kann die Bildqualitätsmetrik vorteilhafterweise eine Entropie eines Grauwerthistogramms und/oder eine Gesamtvariation der Bildwerte (engl. total variation) umfassen. Dadurch, dass die Kostenfunktion auf der Bildqualitätsmetrik basiert, kann vorteilhafterweise eine objektive Bewertung der Bildqualität der rekonstruierten medizinischen Bilddaten ermöglicht werden. Hierdurch kann insbesondere eine Vergleichbarkeit der durch Anwendung der Kostenfunktion bestimmten Kostenwerte zwischen verschiedenen Untersuchungsobjekten und/oder Bildgebungsmodalitäten und/oder Aufnahmeparametern und/oder Betriebsparametern des medizinischen Bildgebungsgerätes sichergestellt werden.

Ferner umfasst die Kostenfunktion eine trainierte Funktion. Dabei wird der Kostenwert durch Anwendung der trainierten Funktion auf Eingabedaten bestimmt. Hierbei basieren die Eingabedaten auf den rekonstruierten medizinischen Bilddaten mehrere Bildwerte umfassend. Ferner basiert zumindest ein Parameter der trainierten Funktion auf der Bildqualitätsmetrik.

Dabei kann die Kostenfunktion, insbesondere die trainierte Funktion, vorteilhafterweise durch ein Verfahren des Maschinenlernens trainiert sein. Insbesondere kann die Kostenfunktion ein neuronales Netzwerk, insbesondere ein faltendes neuronales Netzwerk (engl. convolutional neural network, CNN) bzw. ein Netzwerk umfassend eine Faltungsschicht (engl. convolutional layer) sein.

Eine trainierte Funktion bildet Eingabedaten auf Ausgabedaten ab. Hierbei können die Ausgabedaten insbesondere weiterhin von einem oder mehreren Parametern der trainierten Funktion abhängen. Der eine oder die mehreren Parameter der trainierten Funktion können durch ein Training bestimmt und/oder angepasst werden. Das Bestimmen und/oder das Anpassen des einen oder der mehreren Parameter der trainierten Funktion kann insbesondere auf einem Paar aus Trainingseingabedaten und zugehörigen Trainingsausgabedaten basieren, wobei die trainierte Funktion zur Erzeugung von Trainingsabbildungsdaten auf die Trainingseingabedaten angewendet wird. Insbesondere können das Bestimmen und/oder das Anpassen auf einem Vergleich der Trainingsabbildungsdaten und der Trainingsausgabedaten basieren. Im Allgemeinen wird auch eine trainierbare Funktion, d.h. eine Funktion mit noch nicht angepassten einen oder mehreren Parametern, als trainierte Funktion bezeichnet.

Andere Begriffe für trainierte Funktion sind trainierte Abbildungsvorschrift, Abbildungsvorschrift mit trainierten Parametern, Funktion mit trainierten Parametern, Algorithmus basierend auf künstlicher Intelligenz, Algorithmus des maschinellen Lernens. Ein Beispiel für eine trainierte Funktion ist ein künstliches neuronales Netzwerk, wobei die Kantengewichte des künstlichen neuronalen Netzwerks den Parametern der trainierten Funktion entsprechen. Anstatt des Begriffs "neuronales Netzwerk" kann auch der Begriff "neuronales Netz" verwendet werden. Insbesondere kann eine trainierte Funktion auch ein tiefes künstliches neuronales Netzwerk sein (engl. deep neural network, deep artificial neural network). Ein weiteres Beispiel für eine trainierte Funktion ist eine "Support Vector Machine", weiterhin sind auch insbesondere andere Algorithmen des maschinellen Lernens als trainierte Funktion einsetzbar.

Vorteilhafterweise weist die trainierte Funktion, insbesondere das neuronale Netzwerk, eine Eingabeschicht und eine Ausgabeschicht auf. Dabei kann die Eingabeschicht zum Empfang von Eingabedaten ausgebildet sein. Ferner kann die Ausgabeschicht zur Bereitstellung von Ausgabedaten ausgebildet sein. Dabei kann die Eingabeschicht und/oder die Ausgabeschicht jeweils mehrere Kanäle, insbesondere Neuronen, umfassen.

Des Weiteren kann die Kostenfunktion, insbesondere die trainierte Funktion, durch Trainingsdatensätze trainiert sein, wobei ein Trainingsdatensatz jeweils auf rekonstruierten medizinischen Trainingsbilddaten basierende Eingabedaten umfasst. Dabei können die rekonstruierten medizinischen Trainingsbilddaten insbesondere simuliert und/oder aus simulierten medizinischen Trainingsmessdaten rekonstruiert sein. Ferner können die Trainingsdatensätze jeweils einen Vergleichskostenwert umfassen, der zu den jeweiligen rekonstruierten medizinischen Trainingsbilddaten korrespondiert. Vorteilhafterweise kann der Vergleichskostenwert durch Anwendung der Bildqualitätsmetrik auf die rekonstruierten medizinischen Trainingsbilddaten bestimmt werden. Dabei kann zumindest ein Parameter der Kostenfunktion, insbesondere der trainierten Funktion, auf einem Vergleich von dem Kostenwert, welcher durch Anwendung der Kostenfunktion, insbesondere der trainierten Funktion, auf die rekonstruierten medizinischen Trainingsbilddaten bestimmt wird, mit dem korrespondierenden Vergleichskostenwert basieren.

Hierdurch kann eine besonders zuverlässige und umfassende Bewertung der Bildqualität der rekonstruierten medizinischen Bilddaten durch Anwendung der Kostenfunktion ermöglicht werden. Dadurch, dass die Kostenfunktion auf einer trainierten Funktion basiert, kann vorteilhafterweise eine Bewertung der Bildqualität der rekonstruierten medizinischen Bilddaten bezüglich mehrerer Bildmerkmale ermöglicht werden. Beispielsweise kann die Kostenfunktion, insbesondere die trainierte Funktion, auf mehreren Bildqualitätsmetriken basieren. So kann die Kostenfunktion beispielsweise dazu ausgebildet sein, die Bildqualität der rekonstruierten medizinischen Bilddaten bezüglich einer Röntgenstrahlaufhärtung und/oder eines Signal-zu-Rauschverhältnisses und/oder einer Ausprägung von Bildartefakten, beispielsweise Metallartefakten, zu bewerten.

In einer weiteren vorteilhaften Ausführungsform des vorgeschlagenen Verfahrens kann die Minimierung des Kostenwertes durch Gradientenabstieg weiterhin einen Schritt b2) zur Bestimmung zumindest eines Konsistenzwertes durch Anwendung einer Konsistenzfunktion auf die Messdaten gemäß Rekonstruktionsparametern umfassen. Ferner kann hiernach in einem Schritt c) ein Gradient der Konsistenzfunktion bezüglich der Rekonstruktionsparameter bestimmt werden. Des Weiteren kann der Schritt d) weiterhin eine Anpassung der Rekonstruktionsparameter zusätzlich basierend auf dem Gradienten der Konsistenzfunktion bezüglich der Rekonstruktionsparameter umfassen.

Dabei kann die Konsistenzfunktion, insbesondere stetig, nach den Rekonstruktionsparametern differenzierbar sein. Ferner kann die Konsistenzfunktion vorteilhafterweise dazu ausgebildet sein, die Rekonstruktionsparameter und die medizinischen Messdaten auf zumindest einen Skalar, den zumindest einen Konsistenzwert, zur Bewertung einer Konsistenz zwischen den Rekonstruktionsparametern und den medizinischen Messdaten abzubilden. Dabei kann die Bewertung der Konsistenz, insbesondere bezüglich einer Konsistenzbedingung, beispielsweise eine epipolare Konsistenzbedingung, insbesondere nach dem Grangeat-Theorem, und/oder eine Abtastkonsistenzbedingung, insbesondere nach dem Nyquist-Abtasttheorem, und/oder eine Symmetriekonsistenzbedingung umfassen. Ferner kann die Konsistenz zwischen den rekonstruierten medizinischen Bilddaten und den empfangenen medizinischen Messdaten bestimmt werden, beispielsweise durch Vorwärtsprojektion der rekonstruierten medizinischen Bilddaten.

Ferner kann die Bestimmung des Gradienten der Konsistenzfunktion bezüglich der Rekonstruktionsparameter vorteilhafterweise eine Bestimmung von partiellen Ableitungen der Konsistenzfunktion bezüglich der Rekonstruktionsparameter umfassen. Dabei kann der Gradient der Konsistenzfunktion bezüglich der Rekonstruktionsparameter als Vektor ausgebildet sein.

Die Anpassung der Rekonstruktionsparameter in Schritt d) kann dabei vorzugsweise zusätzlich eine Addition und/oder Multiplikation des, insbesondere skalierten, Gradienten der Konsistenzfunktion bezüglich der Rekonstruktionsparameter umfassen. Vorteilhafterweise kann die Anpassung der Rekonstruktionsparameter hierbei basierend auf den bisherigen Rekonstruktionsparametern, dem Gradienten der Kostenfunktion bezüglich der Rekonstruktionsparameter, sowie dem Gradienten der Konsistenzfunktion bezüglich der Rekonstruktionsparameter erfolgen.

Hierdurch kann vorteilhafterweise eine Berücksichtigung der Konsistenzfunktion als Nebenbedingung der Minimierung des Kostenwertes ermöglicht werden. Durch Berücksichtigung des Gradienten der Konsistenzfunktion bezüglich der Rekonstruktionsparameter kann eine Anpassung der Rekonstruktionsparameter im Schritt d) unter Einhaltung der Konsistenzbedingung vorteilhafterweise sichergestellt werden.

In einer weiteren vorteilhaften Ausführungsform des vorgeschlagenen Verfahrens kann die Konsistenzfunktion eine Konsistenzmetrik umfassen. Dabei kann die Konsistenzmetrik beispielsweise auf dem Grangeat-Theorem und/oder dem Nyquist-Theorem basieren. Ferner kann die Konsistenzmetrik zur Bewertung der Konsistenz zwischen Rekonstruktionsparametern und medizinischen Messdaten bezüglich epipolaren Konsistenzbedingung und/oder einer Abtastkonsistenzbedingung und/oder einer Symmetriekonsistenzbedingung ausgebildet sein. Dadurch, dass die Konsistenzfunktion auf der Konsistenzmetrik basiert, kann vorteilhafterweise eine objektive Bewertung der Konsistenz zwischen den Rekonstruktionsparametern und den medizinischen Bilddaten ermöglicht werden. Hierdurch kann insbesondere eine Vergleichbarkeit des durch Anwendung der Konsistenzfunktion bestimmten zumindest einen Konsistenzwertes zwischen verschiedenen Untersuchungsobjekten und/oder Bildgebungsmodalitäten und/oder Aufnahmeparametern und/oder Betriebsparametern des medizinischen Bildgebungsgerätes sichergestellt werden.

In einer weiteren vorteilhaften Ausführungsform des vorgeschlagenen Verfahrens kann Schritt c) weiterhin eine Bestimmung von partiellen Ableitungen der Bildwerte der rekonstruierten medizinischen Bilddaten bezüglich der Rekonstruktionsparameter umfassen. Ferner kann Schritt c) eine Bestimmung von partiellen Ableitungen der Kostenfunktion bezüglich der Bildwerte der rekonstruierten medizinischen Bilddaten umfassen. Dabei beschreibt die partielle Ableitung einer Funktion eine Ableitung der Funktion, beispielsweise der Kostenfunktion und/oder der Rekonstruktionsfunktion, mit mehreren Argumenten, beispielsweise den Rekonstruktionsparametern und/oder den Bildwerten, nach einem dieser Argumente.

Hierdurch kann der Gradient, insbesondere die Elemente des Gradienten, der Kostenfunktion bezüglich der Rekonstruktionsparameter vorteilhafterweise gemäß Kettenregel für mehrdimensionale Ableitungen der Differenzialrechnung, insbesondere analytisch, bestimmt werden. Insbesondere wenn die Kostenfunktion analytisch vorgegeben ist, können die partiellen Ableitungen der Kostenfunktion bezüglich der Bildwerte der rekonstruierten medizinischen Bilddaten durch Differenzieren vorteilhafterweise analytisch bestimmt werden. Hierdurch kann, insbesondere gegenüber numerischen Näherungsverfahren, eine höhere Genauigkeit bei der Bestimmung des Gradienten der Kostenfunktion bezüglich der Rekonstruktionsparameter erreicht werden.

In einer weiteren vorteilhaften Ausführungsform des vorgeschlagenen Verfahrens kann die Bestimmung der partiellen Ableitungen der Kostenfunktion bezüglich der Bildwerte der rekonstruierten medizinischen Bilddaten mittels einer Rückpropagation der trainierten Funktion, insbesondere der Kostenfunktion, erfolgen. Dabei können die Eingabedaten der Rückpropagation vorteilhafterweise auf dem Kostenwert basieren.

Dabei beschreibt die Rückpropagation einer Funktion einen Algorithmus, welcher häufig zum Trainieren einer trainierten Funktion verwendet werden kann. Zunächst können Trainingsabbildungsdaten durch Anwendung der trainierten Funktion auf Trainingseingabedaten bestimmt werden. Hiernach kann eine Abweichung zwischen den Trainingsabbildungsdaten und Trainingsausgabedaten durch Anwendung einer Fehlerfunktion auf die Trainingsabbildungsdaten und die Trainingsausgabedaten ermittelt werden. Ferner kann zumindest ein Parameter, insbesondere eine Gewichtung, der trainierten Funktion, insbesondere des neuronalen Netzwerks, basierend auf einem Gradienten der Fehlerfunktion bezüglich des zumindest einen Parameters der trainierten Funktion iterativ angepasst werden. Hierdurch kann die Abweichung zwischen den Trainingsabbildungsdaten und den Trainingsausgabedaten während des Trainings der trainierten Funktion vorteilhafterweise minimiert werden.

Vorteilhafterweise kann auf ähnliche Weise der in Schritt b) bestimmte Kostenwert über die Ausgabeschicht der trainierten Funktion rückpropagiert werden. Mit anderen Worten können die Eingabedaten für die Rückpropagation der trainierten Funktion auf dem in Schritt b) bestimmten Kostenwert basieren. Hierdurch kann vorzugsweise zu jedem der Kanäle, insbesondere Neuronen, der Eingangsschicht der trainierten Funktion die partielle Ableitung der Kostenfunktion bezüglich des zum jeweiligen Kanal korrespondierenden Bildwertes bestimmt werden. Vorteilhafterweise kann somit eine analytische Bestimmung der partiellen Ableitungen der Kostenfunktion bezüglich der Bildwerte der rekonstruierten Bilddaten durch Rückpropagation ermöglicht werden.

In einer weiteren vorteilhaften Ausführungsform des vorgeschlagenen Verfahrens kann die Rekonstruktion der medizinischen Bilddaten in Schritt a) weiterhin ein Erzeugen von korrigierten Rekonstruktionsparametern durch Anwenden einer Korrekturfunktion auf die Rekonstruktionsparameter umfassen. Ferner können die korrigierten Rekonstruktionsparameter vorteilhafterweise als Rekonstruktionsparameter für die Rekonstruktionsfunktion in Schritt a) bereitgestellt werden.

Hierbei kann die Korrekturfunktion vorteilhafterweise die, insbesondere bisherigen, Rekonstruktionsparameter auf die korrigierten Rekonstruktionsparameter abbilden. Ferner kann die Korrekturfunktion vorteilhafterweise dazu ausgebildet sein, eine Bewegungskorrektur und/oder Rauschfilterung und/oder Reduktion von Bildartefakten, beispielsweise von Metallartefakten und/oder Streifenartefakten und/oder Einfaltungen auszuführen. Dies kann insbesondere zur Korrektur rigider Bewegungen des Untersuchungsobjekts vorteilhaft sein. Ferner wird ein medizinisches Bildgebungsgerät vorgeschlagen, das ausgebildet ist, ein computerimplementiertes Verfahren zur Rekonstruktion von medizinischen Messdaten auszuführen. Ein solches medizinisches Bildgebungsgerät kann beispielweise als medizinisches Röntgengerät, insbesondere C-Bogen-Röntgengerät und/oder Dyna-CT, und/oder als Computertomographieanlage (CT) und/oder als Magnetresonanztomographieanlage (MRT) und/oder als Sonographieanlage ausgebildet sein.

Ferner wird eine Verarbeitungseinheit, insbesondere ein Mikroprozessor vorgeschlagen, welche ausgebildet ist, Informationen und/oder Daten und/oder Signale von dem medizinischen Bildgebungsgerät und/oder weiteren Komponenten zu verarbeiten. Ferner ist die Verarbeitungseinheit ausgebildet, Steuerbefehle an das medizinische Bildgebungsgerät und/oder seine Bestandteile und/oder weitere Komponenten zu senden.

Insbesondere kann das medizinische Bildgebungsgerät eine erfindungsgemäße Verarbeitungseinheit umfassen. Dabei kann das medizinische Bildgebungsgerät, insbesondere die Verarbeitungseinheit, dazu ausgebildet sein, die medizinischen Messdaten zu empfangen. Hierbei kann das Empfangen der medizinischen Messdaten insbesondere mittels einer Schnittstelle erfolgen, beispielsweise von einem, insbesondere elektronisch und/oder computerlesbaren, Datenspeicher und/oder von einer Datenbank. Des Weiteren kann das medizinische Bildgebungsgerät, insbesondere die Verarbeitungseinheit dazu ausgebildet sein, einen Kostenwert durch Gradientenabstieg umfassend die Schritte a) bis e) zu minimieren:

a) Rekonstruieren von medizinischen Bilddaten mehrere Bildwerte umfassend durch Anwendung einer Rekonstruktionsfunktion auf die empfangenen medizinischen Messdaten gemäß Rekonstruktionsparametern,
b) Bestimmen eines Kostenwertes durch Anwendung einer Kostenfunktion auf die rekonstruierten medizinischen Bilddaten,
c) Bestimmen eines Gradienten des Kostenwertes bezüglich der Rekonstruktionsparameter,
d) Anpassen der Rekonstruktionsparameter basierend auf

- dem Gradienten des Kostenwertes bezüglich der Rekonstruktionsparameter und
- den bisherigen Rekonstruktionsparametern,

e) Bereitstellen der angepassten Rekonstruktionsparameter,

wobei die Schritte a) bis e) bis zum Eintreten einer Abbruchbedingung wiederholt werden,

- Bereitstellen der rekonstruierten medizinischen Bilddaten.

Das medizinische Bildgebungsgerät kann insbesondere eine Darstellungseinheit, beispielsweise ein Display und/oder einen Monitor, umfassen, welche ausgebildet ist, Informationen und/oder graphische Darstellungen von Informationen des medizinischen Bildgebungsgeräts und/oder der Verarbeitungseinheit und/oder weiterer Komponenten anzuzeigen. Insbesondere kann die Darstellungseinheit zur Anzeige der Rekonstruktionsparameter und/oder einer graphischen Darstellung der rekonstruierten medizinischen Bilddaten ausgebildet sein.

Die Vorteile des vorgeschlagenen medizinischen Bildgebungsgeräts entsprechen im Wesentlichen den Vorteilen des vorgeschlagenen computerimplementierten Verfahrens zur Rekonstruktion von medizinischen Bilddaten. Hierbei erwähnte Merkmale, Vorteile oder alternative Ausführungsformen können ebenso auch auf die anderen beanspruchten Gegenstände übertragen werden und umgekehrt.

Die Erfindung betrifft in einem weiteren Aspekt ein Trainingssystem zum Bereitstellen einer trainierten Funktion, umfassend eine Trainingsschnittstelle und eine Trainingsrecheneinheit,

- wobei die Trainingsschnittstelle und/oder die Trainingsrecheneinheit zum Empfangen von rekonstruierten medizinischen Trainingsbilddaten ausgebildet sind,
- wobei die Trainingsschnittstelle und/oder die Trainingsrecheneinheit weiterhin zum Bestimmen eines Vergleichskostenwertes basierend auf den rekonstruierten medizinischen Trainingsbilddaten ausgebildet sind,
  wobei der Vergleichskostenwert vorteilhafterweise durch Anwendung der Bildqualitätsmetrik auf die rekonstruierten medizinischen Trainingsbilddaten bestimmt werden kann,
- wobei die Trainingsrecheneinheit ferner zum Bestimmen eines Trainingskostenwertes durch Anwendung der trainierten Funktion auf Eingabedaten ausgebildet ist,
  wobei die Eingabedaten auf den rekonstruierten medizinischen Trainingsbilddaten basieren,
- wobei die Trainingsrecheneinheit zudem zum Anpassen zumindest eines Parameters der trainierten Funktion basierend auf einem Vergleich des Vergleichskostenwertes und des Trainingskostenwertes ausgebildet ist,
- wobei die Trainingsschnittstelle weiterhin zum Bereitstellen der trainierten Funktion ausgebildet ist.

Ein solches Trainingssystem kann insbesondere dazu ausgebildet sein die zuvor beschriebenen erfindungsgemäßen Verfahren zur Rekonstruktion von medizinischen Bilddaten und ihre Aspekte auszuführen. Das Trainingssystem ist dazu ausgebildet, diese Verfahren und ihre Aspekte auszuführen, indem die Trainingsschnittstelle und die Trainingsrecheneinheit ausgebildet sind, die entsprechenden Verfahrensschritte auszuführen. Ferner kann das Trainingssystem dazu ausgebildet sein, die trainierte Funktion zu trainieren.

Ferner wird ein Computerprogramm oder ein Computerprogrammprodukt vorgeschlagen, das ein Programm umfasst und direkt in einen Datenspeicher einer programmierbaren Recheneinheit ladbar ist und Programmmittel, z.B. Bibliotheken und Hilfsfunktionen, aufweist, um ein computerimplementiertes Verfahren zur Rekonstruktion von medizinischen Bilddaten auszuführen, wenn das Computerprogramm oder das Computerprogrammprodukt ausgeführt wird. Das Computerprogramm oder das Computerprogrammprodukt kann dabei eine Software mit einem Quellcode, der noch kompiliert und gebunden oder der nur interpretiert werden muss, oder einen ausführbaren Softwarecode umfassen, der zur Ausführung nur noch in die Verarbeitungseinheit zu laden ist. Durch das Computerprogramm oder das Computerprogrammprodukt kann das computerimplementierte Verfahren zur Rekonstruktion von medizinischen Bilddaten schnell, identisch wiederholbar und robust ausgeführt werden. Das Computerprogramm oder das Computerprogrammprodukt ist so konfiguriert, dass es mittels der Verarbeitungseinheit die erfindungsgemäßen Verfahrensschritte ausführen kann. Die Verarbeitungseinheit muss dabei jeweils die Voraussetzungen wie beispielsweise einen entsprechenden Arbeitsspeicher, eine entsprechende Grafikkarte oder eine entsprechende Logikeinheit aufweisen, so dass die jeweiligen Verfahrensschritte effizient ausgeführt werden können.

Eine weitgehend softwarebasierte Realisierung hat den Vorteil, dass auch schon bisher verwendete Verarbeitungseinheiten und/oder Trainingssysteme auf einfache Weise durch ein Software-Update nachgerüstet werden können, um auf die erfindungsgemäße Weise zu arbeiten. Ein solches Computerprogrammprodukt kann neben dem Computerprogramm gegebenenfalls zusätzliche Bestandteile wie z. B. eine Dokumentation und/oder zusätzliche Komponenten, sowie Hardware-Komponenten, wie z.B. Hardware-Schlüssel (Dongles etc.) zur Nutzung der Software, umfassen.

Des Weiteren wird ein, insbesondere elektronischer und/oder elektronisch lesbarer, Datenspeicher oder Datenträger für eine Verarbeitungseinheit eines medizinischen Bildgebungsgeräts vorgeschlagen. Dabei ist in dem erfindungsgemäßen Datenspeicher ein Programmcode gespeichert, welcher zumindest eine Ausführungsform des erfindungsgemäßen Computerprogramms oder des erfindungsgemäßen Computerprogrammprodukts umfasst. Weiterhin können Steuerinformationen des Computerprogrammprodukts auf dem vorgeschlagenen Datenspeicher gespeichert sein. Die Steuerinformationen des vorgeschlagenen Datenspeichers können derart ausgestaltet sein, dass sie bei Verwendung des Datenspeichers in einer Verarbeitungseinheit ein erfindungsgemäßes Verfahren durchführen. Beispiele für, insbesondere elektronische und/oder elektronisch lesbare, Datenspeicher sind eine DVD, ein Magnetband oder ein USB-Stick, auf welchem elektronisch lesbare Steuerinformationen, insbesondere Software, gespeichert ist. Wenn diese Steuerinformationen von dem Datenspeicher gelesen und in eine Verarbeitungseinheit gespeichert werden, können alle erfindungsgemäßen Ausführungsformen der vorab beschriebenen Verfahren durchgeführt werden. So kann die Erfindung auch von dem besagten Datenspeicher ausgehen.

Dementsprechend kann das erfindungsgemäße medizinische Bildgebungsgerät insbesondere das im Zusammenhang mit dem erfindungsgemäßen Datenspeicher, dem erfindungsgemäßen Computerprogramm und/oder dem erfindungsgemäßen Verfahren genannte medizinische Bildgebungsgerät sein.

Ausführungsbeispiele der Erfindung sind in den Zeichnungen dargestellt und werden im Folgenden näher beschrieben. In unterschiedlichen Figuren werden für gleiche Merkmale die gleichen Bezugszeichen verwendet. Es zeigen

Fig. 1 bis 4 schematische Darstellungen von Ausführungsbeispielen eines vorgeschlagenen computerimplementierten Verfahrens zur Rekonstruktion von medizinischen Bilddaten;

Fig. 5 ein schematisches Flussdiagramm zum Bereitstellen einer trainierten Funktion;

Fig. 6 ein Ausführungsbeispiel einer Verarbeitungseinheit;

Fig. 7 ein Ausführungsbeispiel eines Trainingssystems;

Fig. 8 eine schematische Darstellung eines C-Bogen-Röntgengeräts.

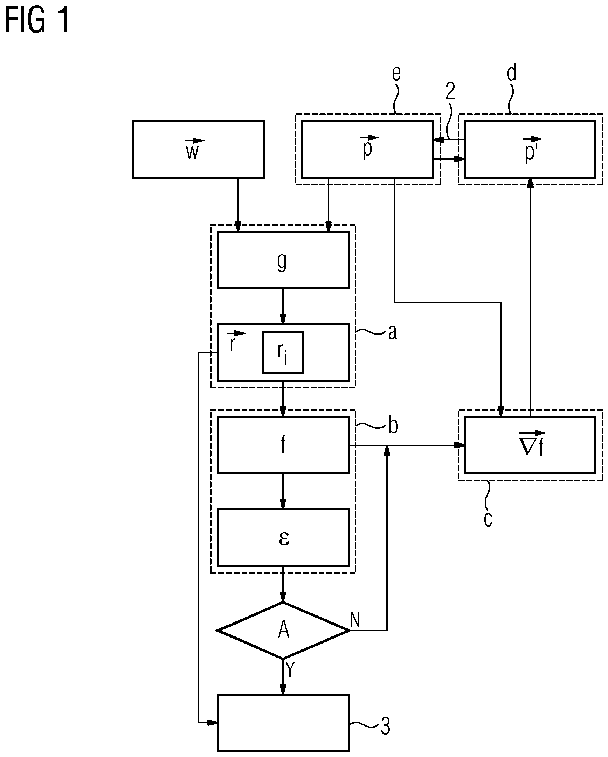

In Fig. 1 ist eine Ausführungsform des vorgeschlagenen computerimplementierten Verfahrens zur Rekonstruktion von medizinischen Bilddaten schematisch dargestellt. In einem ersten Schritt können medizinische Messdaten $\vec{w}$ empfangen werden. Hierbei können die medizinischen Messdaten $\vec{w}$ von einem medizinischen Bildgebungsgerät aufgenommen sein und/oder von einem medizinischen Bildgebungsgerät und/oder einer Verarbeitungseinheit empfangen werden. Ferner können die medizinischen Messdaten von der Verarbeitungseinheit, insbesondere des medizinischen Bildgebungsgeräts, bereitgestellt werden. In einem weiteren Schritt a) können die medizinischen Bilddaten $\vec{r}$ mehrere Bildwerte $r_i$ umfassend durch Anwendung einer Rekonstruktionsfunktion g auf die empfangenen medizinischen Messdaten $\vec{w}$ gemäß Rekonstruktionsparametern $\vec{p}$ rekonstruiert werden. Dabei kann die Rekonstruktionsfunktion g insbesondere eine Abbildung zwischen den empfangenen medizinischen Messdaten $\vec{w}$ auf die medizinischen Bilddaten $\vec{r}$ umfassen:

$$\vec{r} = g(\vec{w}, \vec{p}), g: \mathbb{R}^{u+v} \to \mathbb{R}^q \quad (1),$$

wobei $\vec{w} \in \mathbb{R}^u$ und $\vec{p} \in \mathbb{R}^v$.

Ferner kann in einem Schritt b) durch Anwenden einer Kostenfunktion f=f($\vec{r}$) auf die rekonstruierten medizinischen Bilddaten $\vec{r}$ ein Kostenwert $\varepsilon$ bestimmt werden. Vorteilhafterweise kann die Kostenfunktion f die rekonstruierten

medizinischen Bilddaten $\vec{r}$ auf einen Skalar $\varepsilon$ abbilden:

$$\epsilon = f(\vec{r}), f: \mathbb{R}^q \to \mathbb{R}_{0,+} \quad (2).$$

Unter der Annahme, dass die Kostenfunktion f, insbesondere stetig, nach den Rekonstruktionsparametern $\vec{p}$ differenzierbar ist, kann in Schritt c) ein Gradient $\vec{\nabla}f$ der Kostenfunktion f bezüglich der Rekonstruktionsparameter $\vec{p}$ bestimmt werden. In Schritt d) können die Rekonstruktionsparameter $\vec{p}$ sowohl basierend auf dem Gradienten der Kostenfunktion $\vec{\nabla}f$ bezüglich der Rekonstruktionsparameter $\vec{p}$ als auch den bisherigen Rekonstruktionsparametern $\vec{p}$ angepasst werden. In Schritt e) können die angepassten Rekonstruktionsparametern $\vec{p}'$ als Rekonstruktionsparameter für Schritt a) bereitgestellt 2 werden. Des Weiteren können die Schritte a) bis e) vorteilhafterweise bis zum Eintreten einer Abbruchbedingung A wiederholt werden.

Dabei kann die Abbruchbedingung A beispielsweise nach Schritt b) überprüfen, ob der bestimmte Kostenwert $\varepsilon$ einen vorgegebenen Schwellwert unterschreitet. Ferner kann eine maximale Anzahl von Wiederholungen der Schritte a) bis e) durch die Abbruchbedingung festgelegt sein. Vorteilhafterweise kann mittels der Abbruchbedingung A eine Überprüfung erfolgen ob der bestimmte Kostenwert $\varepsilon$ unter einem vorgegebenen Schwellwert liegt und/oder die maximale Anzahl von Wiederholungen erreicht und/oder überschritten wurde. Sofern die Abbruchbedingung A eintritt, kann vorteilhafterweise eine Bereitstellung 3 der in Schritt a), insbesondere zuletzt, rekonstruierten medizinischen Bilddaten r erfolgen. Vorteilhafterweise kann die Abbruchbedingung A nach Schritt b) überprüft werden.

Ferner kann durch wiederholte Ausführung der Schritte a) bis e) eine Minimierung des Kostenwertes $\varepsilon$ durch Gradientenabstieg erreicht werden. Hierbei können die Rekonstruktionsparameter $\vec{p}$ derart bestimmt werden, dass

$$\vec{p} = \mathrm{argmin}_{\vec{p}}\frac{1}{2}\epsilon^2 = \mathrm{argmin}_{\vec{p}}\frac{1}{2}f\big(g(\vec{p})\big)^2 \quad (3),$$

wobei $\vec{\hat{p}}$ das Optimum der Rekonstruktionsparameter $\vec{p}$ zur Minimierung des Kostenwertes $\varepsilon$ bezeichnet. Ferner werden die empfangenen Messdaten $\vec{w}$ als, insbesondere während der Minimierung des Kostenwertes $\varepsilon$, unveränderlich angenommen.

Die Bestimmung des Gradienten der Kostenfunktion $\vec{\nabla}f$ bezüglich der Rekonstruktionsparameter $\vec{p}$ kann durch Bestimmung der partiellen Ableitungen erfolgen:

$$\vec{\nabla}f = \frac{\partial f}{\partial \vec{p}} \quad (4).$$

Dabei werden die partiellen Ableitungen der Kostenfunktion f bezüglich jedem der Rekonstruktionsparameter $p_1, \ldots, p_v \in \vec{p}$ benötigt,

$$\vec{\nabla}f = \frac{\partial f}{\partial \vec{p}} = \left(\frac{\partial f}{\partial p_1}, \ldots, \frac{\partial f}{\partial p_v}\right) \quad (5).$$

Ferner kann die Kostenfunktion f vorteilhafterweise auf einer Bildqualitätsmetrik basieren. Vorteilhafterweise kann die Bildqualitätsmetrik beispielsweise eine Regression eines Rückprojektionsfehlers, insbesondere bei einer Bewegungskorrektur, umfassen. Zudem kann die Bildqualitätsmetrik vorzugsweise zur Bewertung der Bildqualität bezüglich einer Röntgenstrahlaufhärtung und/oder eines Signal-zu-Rauschverhältnisses und/oder einer Ausprägung von Bildartefakten, beispielsweise Metallartefakten, ausgebildet sein.

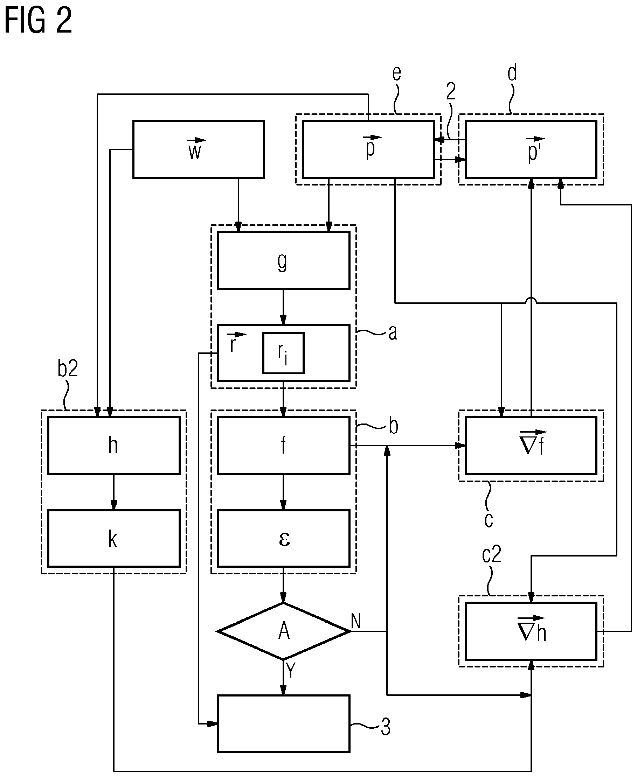

Fig. 2 zeigt schematisch eine weitere Ausführungsform des vorgeschlagenen computerimplementierten Verfahrens zur Rekonstruktion von medizinischen Bilddaten $\vec{r}$. Dabei kann in einem Schritt b2) zumindest ein Konsistenzwert k durch Anwenden einer Konsistenzfunktion h auf die Messdaten $\vec{w}$ gemäß Rekonstruktionsparametern $\vec{p}$ bestimmt werden.

Ferner kann in einem weiteren Schritt c2) ein Gradient der Konsistenzfunktion $\vec{\nabla}h$ bezüglich der Rekonstruktionsparameter $\vec{p}$ bestimmt werden. Vorteilhafterweise kann die Konsistenzfunktion h eine Abbildung von den empfangenen medizinischen Messdaten und den Rekonstruktionsparametern $\vec{p}$ auf einen Skalar k umfassen:

$$k = h(\vec{w}, \vec{p}), h: \mathbb{R}^{u+v} \to \mathbb{R}_{0,+} \quad (6).$$

Dabei wird angenommen, dass die Konsistenzfunktion h, insbesondere stetig, nach den Rekonstruktionsparametern $\vec{p}$ differenzierbar ist. Des Weiteren kann die Bestimmung des Gradienten $\vec{\nabla}h$ der Konsistenzfunktion bezüglich der Rekonstruktionsparameter $\vec{p}$ vorteilhafterweise analog zur Bestimmung des Gradienten der Kostenfunktion $\vec{\nabla}f$ bezüglich der Rekonstruktionsparameter $\vec{p}$ erfolgen. Dabei können vorzugsweise alle partiellen Ableitungen der Konsistenzfunktion h bezüglich jedem der Rekonstruktionsparameter $p_1, \ldots, p_v \in \vec{p}$ bestimmt werden:

$$\vec{\nabla}h = \frac{\partial h}{\partial \vec{p}} = \left( \frac{\partial h}{\partial p_1}, \ldots, \frac{\partial h}{\partial p_v} \right) \quad (7).$$

Des Weiteren kann die Anpassung der Rekonstruktionsparameter $\vec{p}$ in Schritt d) vorzugsweise zusätzlich basierend auf dem Gradienten der Konsistenzfunktion $\vec{\nabla}h$ bezüglich der Rekonstruktionsparameter erfolgen. Dabei kann das in Gleichung (3) beschriebene Optimierungsproblem wie folgt ausgedrückt werden:

$$\vec{p} = \mathrm{argmin}_{\vec{p}} \frac{1}{2} \epsilon^2 + \lambda k = \mathrm{argmin}_{\vec{p}} \frac{1}{2} f\big(g(\vec{p})\big)^2 + \lambda h(\vec{w}, \vec{p}) \quad (8),$$

wobei $\lambda$ einen Skalar zur Skalierung des Konsistenzwertes k der Konsistenzfunktion h bezeichnet.

Dabei kann die Konsistenzfunktion h vorteilhafterweise eine Konsistenzmetrik umfassen. Beispielsweise kann die Konsistenzmetrik auf dem Grangeat-Theorem und/oder dem Nyquist-Theorem basieren. Ferner kann die Konsistenzmetrik zur Bewertung der Konsistenz zwischen Rekonstruktionsparametern und medizinischen Messdaten bezüglich epipolaren Konsistenzbedingung und/oder einer Abtastkonsistenzbedingung und/oder einer Symmetriekonsistenzbedingung ausgebildet sein.

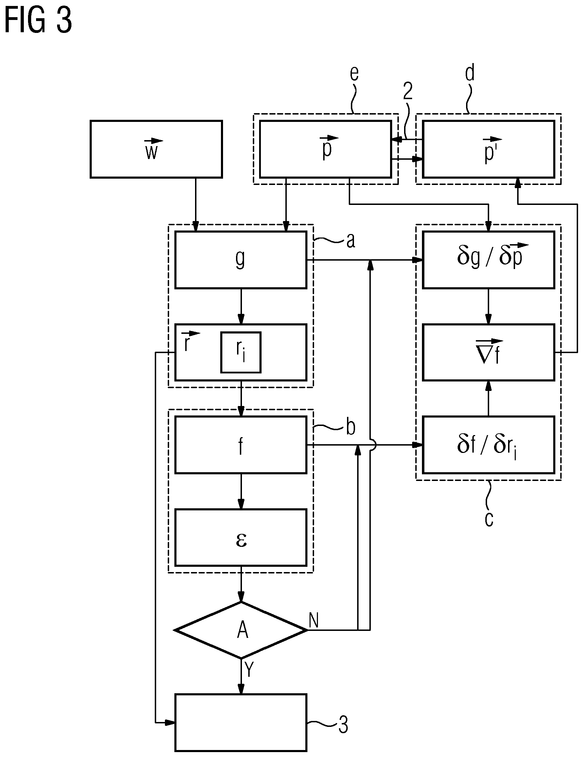

In Fig. 3 ist eine schematische Darstellung einer weiteren Ausführungsform des vorgeschlagenen computerimplementierten Verfahrens zur Rekonstruktion von medizinischen Bilddaten $\vec{r}$ dargestellt. Dabei kann Schritt c) weiterhin eine Bestimmung von partiellen Ableitungen der Rekonstruktionsfunktion g bezüglich der Rekonstruktionsparameter $\vec{p}$ umfassen, $\frac{\partial g}{\partial p_j} \forall j = 1, \ldots, v$. Ferner können in Schritt c) die partiellen Ableitungen der Kostenfunktion f bezüglich der Bildwerte $r_i$ der rekonstruierten medizinischen Bilddaten $\vec{r}$ bestimmt werden, $\frac{\partial f}{\partial r_i} \forall i = 1, \ldots, q$. Dabei kann der Gradient der Kostenfunktion $\vec{\nabla}f$ bezüglich der Rekonstruktionsparameter $\vec{p}$ vorteilhafterweise gemäß Kettenregel für mehrdimensionale Ableitungen der Differenzialrechnung, insbesondere analytisch, bestimmt werden. Für die partiellen Ableitungen der Kostenfunktion f nach jedem der Rekonstruktionsparameter $p_1, \ldots, p_v \in \vec{p}$ in Gleichung (5) gilt somit

$$\frac{\partial f}{\partial p_j} = \frac{\partial f\big(g(\vec{p})\big)}{\partial p_j} = \sum_{i=1}^{q} \frac{\partial f}{\partial r_i} \frac{\partial g}{\partial p_j} \quad (9).$$

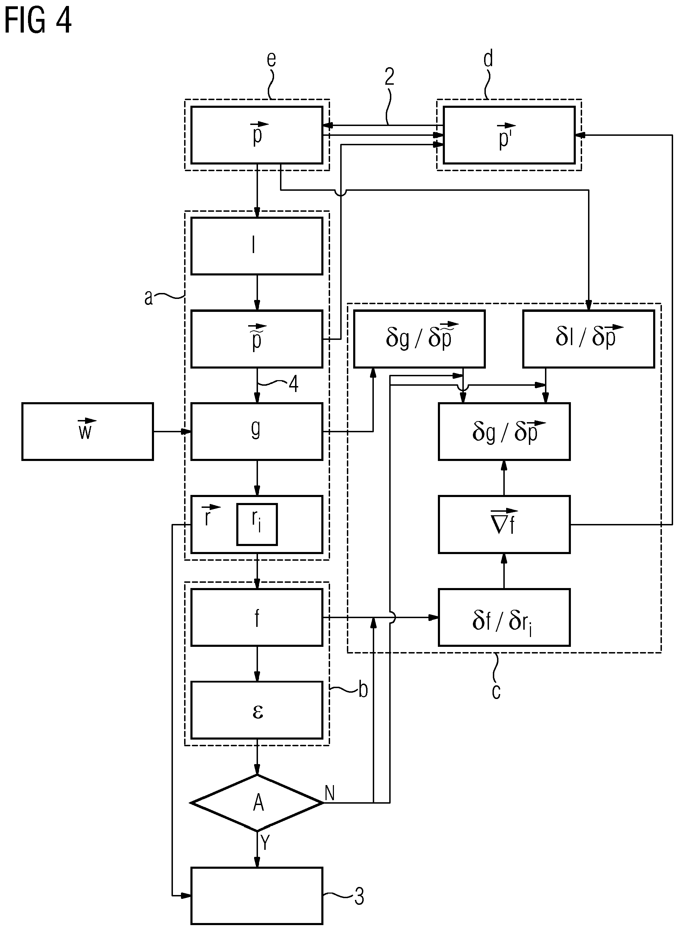

In Fig. 4 ist eine weitere Ausführungsform des vorgeschlagenen computerimplementierten Verfahrens schematisch dargestellt. Dabei kann Schritt a) weiterhin eine Erzeugung von korrigierten Rekonstruktionsparametern $\vec{\tilde{p}}$ durch Anwenden einer Korrekturfunktion l auf die Rekonstruktionsparameter $\vec{p}$ umfassen. Vorteilhafterweise kann die Korrekturfunktion l die Rekonstruktionsparameter $\vec{p}$ auf die korrigierten Rekonstruktionsparameter $\vec{\tilde{p}}$ abbilden:

$$\vec{\tilde{p}} = l(\vec{p}), l: \mathbb{R}^v \to \mathbb{R}^v \quad (10).$$

Ferner können die korrigierten Rekonstruktionsparameter $\vec{\tilde{p}}$ als Rekonstruktionsparameter $\vec{p}$ für die Rekon-

struktionsfunktion g in Schritt a) bereitgestellt 4 werden. Aus den Gleichungen (1) und (10) folgt:

$$\vec{r} = g(\vec{w}, \vec{\tilde{p}}) = g(\vec{w}, l(\vec{p})) \quad (11).$$

Zur Bestimmung des Gradienten der partiellen Ableitungen der Rekonstruktionsfunktion g nach jedem der Rekonstruktionsparametern $\vec{p}$ in Gleichung (9) ergibt sich folglich:

$$\frac{\partial g}{\partial p_j} = \frac{\partial g}{\partial \tilde{p}_i}\frac{\partial l}{\partial p_j} \quad (12).$$

Im Folgenden wird beispielhaft eine dreidimensionale Bewegungskorrektur bei der Rekonstruktion medizinischer Bilddaten aus zweidimensionalen Projektionsröntgenbildern als medizinische Messdaten $\vec{w}$ von einem Untersuchungsobjekt skizziert. Hierbei kann die Korrekturfunktion l beispielsweise zur Korrektur einer rigiden Bewegung des Untersuchungsobjekts ausgebildet sein. Dabei kann eine rigide dreidimensionale Bewegung durch eine homogene Bewegungsmatrix $M(\vec{p}) \in \mathbb{R}^{4\times4}$ beschrieben werden, wobei $\vec{p} \in \mathbb{R}^6$. Hierbei kann die Korrekturfunktion l vorteilhafterweise die homogene Bewegungsmatrix **M** umfassen.

Ferner können Aufnahmeparameter, insbesondere eine Akquisitionsgeometrie, der empfangenen medizinischen Messdaten $\vec{w}$ durch eine Projektionsmatrix $D \in \mathbb{R}^{3\times4}$ beschrieben werden. Dabei kann die Rekonstruktionsfunktion g vorteilhafterweise die Projektionsmatrix D umfassen. Zunächst können die empfangenen medizinischen Messdaten $\vec{w}$ interpoliert werden:

$$s(\varphi, \rho): \mathbb{R}^2 \to \mathbb{R} \quad (13),$$

wobei s eine kontinuierliche Funktion entlang der beiden Raumrichtungen $\varphi$ und $\rho$ bezeichnet.

Ein bewegungskompensierter Bildwert $r_i$ der medizinischen Bilddaten $\vec{r}$ (mit $r_i \in \vec{r}$) kann bestimmt werden gemäß:

$$r_i = r_i^0 + s(\varphi, \rho) \quad (14)$$

$$\text{mit } \varphi = [DMx_i]_1/[DMx_i]_3 \quad (15)$$

$$\text{und } \rho = [DMx_i]_2/[DMx_i]_3 \quad (16),$$

wobei $[\cdot]_z$ die Zeile z aus der jeweiligen Matrix extrahiert, $r_i^0$ den Dichtewert eines Röntgenschichtbildes ohne Projektion s rekonstruiert bezeichnet und $x_i \in \mathbb{R}^4$ räumliche Positionen der Bildwerte $r_i$, insbesondere der Voxel, in homogenen Koordinaten beschreibt.

Aus den Gleichungen (14) bis (16) (und analog zu Gleichung (12)) folgt:

$$\frac{\partial r_i}{\partial \vec{p}} = \frac{\partial r_i}{\partial \varphi}\frac{\partial \varphi}{\partial \vec{p}} + \frac{\partial r_i}{\partial \rho}\frac{\partial \rho}{\partial \vec{p}} \quad (17)$$

In Gleichung (17) entsprechen $\frac{\partial r_i}{\partial \varphi}$ und $\frac{\partial r_i}{\partial \rho}$ den numerischen Ableitungen des Projektionsröntgenbildes entlang der Zeilen und Spalten. Ferner können $\frac{\partial \varphi}{\partial \vec{p}}$ und $\frac{\partial \rho}{\partial \vec{p}}$ vorteilhafterweise analytisch bestimmt werden.

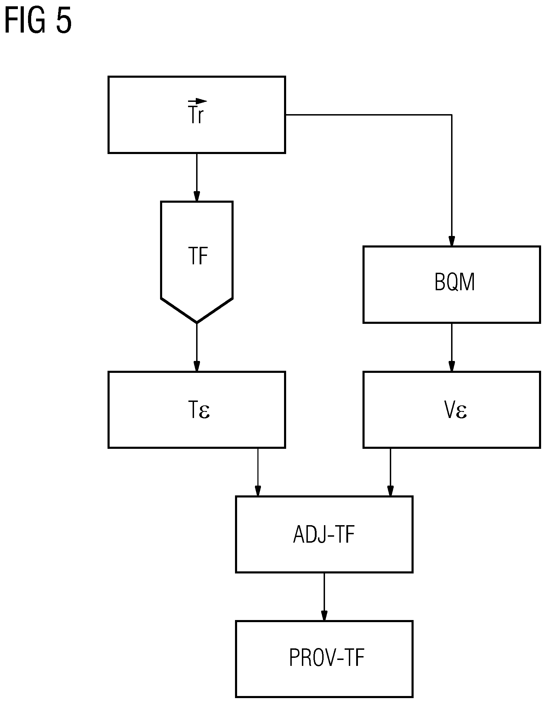

Fig. 5 zeigt ein schematisches Flussdiagramm eines Verfahrens zum Bereitstellen einer trainierten Funktion TF. Vorteilhafterweise kann die Kostenfunktion f eine trainierte Funktion TF umfassen. Insbesondere kann die trainierte Funktion TF als Kostenfunktion f in Schritt b) zur Bestimmung des Kostenwertes $\varepsilon$ auf die rekonstruierten medizinischen Bilddaten $\vec{r}$ angewendet werden.

Dabei kann der Kostenwert $\varepsilon$ durch Anwendung der trainierten Funktion TF auf Eingabedaten bestimmt werden, wobei die Eingabedaten auf den rekonstruierten medizinischen Bilddaten $\vec{r}$ umfassend mehrere Bildwerte $r_i$ basieren können. Ferner kann zumindest ein Parameter der trainierten Funktion TF vorzugsweise auf der Bildqualitätsmetrik basieren.

Zur Bereitstellung der trainierten Funktion TF können in einem ersten Schritt rekonstruierte medizinische Trainingsbilddaten $\vec{Tr}$, insbesondere mittels einer Trainingsschnittstelle TIF und/oder einer Trainingsrecheneinheit TCU, empfangen werden. Dabei können die rekonstruierten medizinischen Trainingsbilddaten $\vec{Tr}$ insbesondere durch Anwendung der Rekonstruktionsfunktion g auf medizinische Trainingsmessdaten gemäß Trainingsrekonstruktionsparametern rekonstruiert sein.

Ein weiterer Schritt kann das Bestimmen eines Trainingskostenwertes $T\varepsilon$ durch Anwendung der trainierten Funktion TF auf Eingabedaten insbesondere mittels der Trainingsrecheneinheit TCU, umfassen. Dabei können die Eingabedaten auf den rekonstruierten medizinischen Trainingsbilddaten basieren. Die trainierte Funktion TF kann hierbei ein neuronales Netzwerk, insbesondere ein faltendes neuronales Netzwerk bzw. ein Netzwerk umfassend eine Faltungsschicht sein.

Des Weiteren kann ein Vergleichskostenwert $V\varepsilon$, der zu den jeweiligen rekonstruierten medizinischen Trainingsbilddaten $\vec{Tr}$ korrespondiert, bestimmt werden. Vorteilhafterweise kann der Vergleichskostenwert $V\varepsilon$ durch Anwendung der Bildqualitätsmetrik BQM auf die rekonstruierten medizinischen Trainingsbilddaten $\vec{Tr}$, insbesondere mittels der Trainingsrecheneinheit TCU, bestimmt werden.

In einem weiteren Schritt ADJ-TF kann zumindest ein Parameter der trainierten Funktion TF, insbesondere mittels der Trainingsrecheneinheit TCU, basierend auf einem Vergleich des Vergleichskostenwertes $V\varepsilon$ und des Trainingskostenwertes $T\varepsilon$ angepasst werden. In diesem Ausführungsbeispiel kann die trainierte Funktion TF ein künstliches neuronales Netzwerk umfassen. Dabei kann das Anpassen des künstlichen neuronalen Netzwerkes das Anpassen mindestens eines Kantengewichts des künstlichen neuronalen Netzwerks umfassen. Ferner kann das Anpassen auf einem Rückpropagationsalgorithmus basieren (engl. backpropagation).

In einem letzten Schritt PROV-TF kann ein Bereitstellen der trainierten Funktion TF, insbesondere mittels der Trainingsschnittstelle TIF und/oder der Trainingsrecheneinheit TCU, erfolgen. Im dargestellten Ausführungsbeispiel kann die trainierte Funktion TF gespeichert werden. Alternativ kann die trainierte Funktion TF (oder eine oder mehrere ihrer Parameter) auch angezeigt werden oder zur weiteren Verarbeitung übertragen werden.

Des Weiteren kann die Bestimmung der partiellen Ableitungen der Kostenfunktion f bezüglich der Bildwerte $r_i$ der rekonstruierten medizinischen Bilddaten $\vec{r}$ in Gleichung (9) mittels einer Rückpropagation der trainierten Funktion TF erfolgen. Dabei können die Eingabedaten der Rückpropagation vorteilhafterweise auf dem Kostenwert $\varepsilon$ basieren.

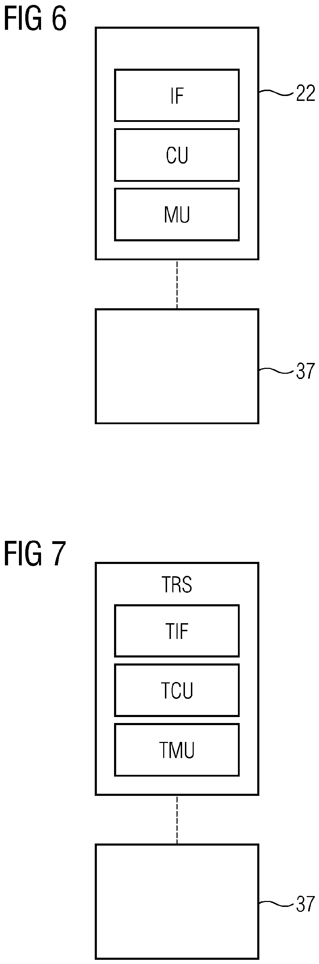

Fig. 6 zeigt eine Verarbeitungseinheit 22, Fig. 7 zeigt ein Trainingssystem TRS. Die dargestellte Verarbeitungseinheit 22 kann vorteilhafterweise dazu ausgebildet sein, ein erfindungsgemäßes computerimplementiertes Verfahren zur Rekonstruktion von medizinischen Bilddaten $\vec{r}$ auszuführen. Das dargestellte Trainingssystem TRS kann vorteilhafterweise dazu ausgebildet sein, ein Verfahren zum Bereitstellen einer trainierten Funktion TF auszuführen. Die Verarbeitungseinheit 22 kann vorteilhafterweise eine Schnittstelle IF, eine Recheneinheit CU und eine Speichereinheit MU umfassen. Ferner kann das Trainingssystem TRS vorteilhafterweise eine Trainingsschnittstelle TIF, eine Trainingsrecheneinheit TCU und eine Trainingsspeichereinheit TMU umfassen.

Bei der Verarbeitungseinheit 22 und/oder bei dem Trainingssystem TRS kann es sich insbesondere um einen Computer, einen Mikrocontroller oder um einen integrierten Schaltkreis handeln. Alternativ kann es sich bei der Verarbeitungseinheit 22 und/oder bei dem Trainingssystem TRS um einen realen oder virtuellen Verbund von Computern handeln (ein englischer Fachbegriff für einen realen Verbund ist "Cluster", ein englischer Fachbegriff für einen virtuellen Verbund ist "Cloud"). Die Verarbeitungseinheit 22 und/oder das Trainingssystem TRS kann auch als virtuelles System ausgebildet sein, das auf einem realen Computer oder einem realen oder virtuellen Verbund von Computern ausgeführt wird (engl. virtualization).

Bei einer Schnittstelle IF und/oder einer Trainingsschnittstelle TIF kann es sich um eine Hardware- oder Softwareschnittstelle handeln (beispielsweise PCI-Bus, USB oder Firewire). Eine Recheneinheit CU und/oder eine Trainingsrecheneinheit TCU kann Hardware-Elemente oder Software-Elemente aufweisen, beispielsweise einen Mikroprozessor oder ein sogenanntes FPGA (englisches Akronym für "Field Programmable Gate Array"). Eine Speichereinheit MU und/oder eine Trainingsspeichereinheit TMU kann als nicht dauerhafte Arbeitsspeicher (Random Access Memory, kurz RAM) oder als dauerhafter Massenspeicher (Festplatte, USB-Stick, SD-Karte, Solid State Disk) realisiert sein.

Die Schnittstelle IF und/oder die Trainingsschnittstelle TIF können insbesondere mehrere Unterschnittstellen umfassen, die unterschiedliche Schritte der jeweiligen Verfahren ausführen. Mit anderen Worten kann die Schnittstelle IF und/oder die Trainingsschnittstelle TIF auch als Vielzahl von Schnittstellen IF bzw. Vielzahl von Trainingsschnittstellen TIF aufgefasst werden. Die Recheneinheit CU und/oder die Trainingsrecheneinheit TCU können insbesondere mehrere Unterrecheneinheiten umfassen, die unterschiedliche Schritte der jeweiligen Verfahren ausführen. Mit anderen Worten kann die Recheneinheit CU und/oder die Trainingsrecheneinheit TCU auch als Vielzahl von Recheneinheiten CU bzw. Vielzahl von Trainingsrecheneinheiten TCU aufgefasst werden.

Dabei kann die Schnittstelle IF der vorgeschlagenen Verarbeitungseinheit 22 zum Empfangen der medizinischen Messdaten $\vec{w}$ ausgebildet sein. Ferner kann die Recheneinheit CU zur Rekonstruktion der medizinischen Bilddaten $\vec{r}$ mehrere Bildwerte $r_i$ umfassend durch Anwendung der Rekonstruktionsfunktion g auf die empfangenen medizinischen Messdaten $\vec{w}$ ausgebildet sein. Zudem kann die Recheneinheit CU zur Bestimmung des Kostenwertes $\varepsilon$ bezüglich der Rekonstruktionsparameter $\vec{p}$ ausgebildet sein. Verner kann die Recheneinheit CU zum Anpassen der Rekonstruktionsparameter $\vec{p}$ sowohl basierend auf dem Gradienten der Kostenfunktion $\vec{\nabla}f$ bezüglich der Rekonstruktionsparameter $\vec{p}$ als auch den bisherigen Rekonstruktionsparametern $\vec{p}$ ausgebildet sein. Ferner kann die Recheneinheit CU und/oder die Schnittstelle IF zum Bereitstellen der angepassten Rekonstruktionsparameter $\vec{p}$' ausgebildet sein. Zudem kann die Schnittstelle IF zum Bereitstellen der rekonstruierten medizinischen Bilddaten $\vec{r}$ ausgebildet sein.

Ferner kann die Trainingsschnittstelle TIF zum Empfangen der rekonstruierten medizinischen Trainingsbilddaten $\vec{Tr}$ ausgebildet sein. Zudem kann die Trainingsrecheneinheit TCU weiterhin zum Bestimmen eines Vergleichskostenwertes $V_\varepsilon$ basierend auf den rekonstruierten medizinischen Trainingsbilddaten $\vec{Tr}$ ausgebildet sein. Ferner kann die Trainingsrecheneinheit TCU zum Bestimmen eines Trainingskostenwertes $T_\varepsilon$ durch Anwendung der trainierten Funktion TF auf Eingabedaten ausgebildet sein, wobei die Eingabedaten auf den rekonstruierten medizinischen Trainingsbilddaten $\vec{Tr}$ basieren. Des Weiteren kann die Trainingsrecheneinheit TCU zum Anpassen ADJ-TF zumindest eines Parameters der trainierten Funktion TF basierend auf einem Vergleich des Vergleichskostenwertes $V_\varepsilon$ und des Trainingskostenwertes $T_\varepsilon$ ausgebildet sein. Zudem kann die Trainingsschnittstelle TIF weiterhin zum Bereitstellen PROV-TF der trainierten Funktion TF ausgebildet sein.

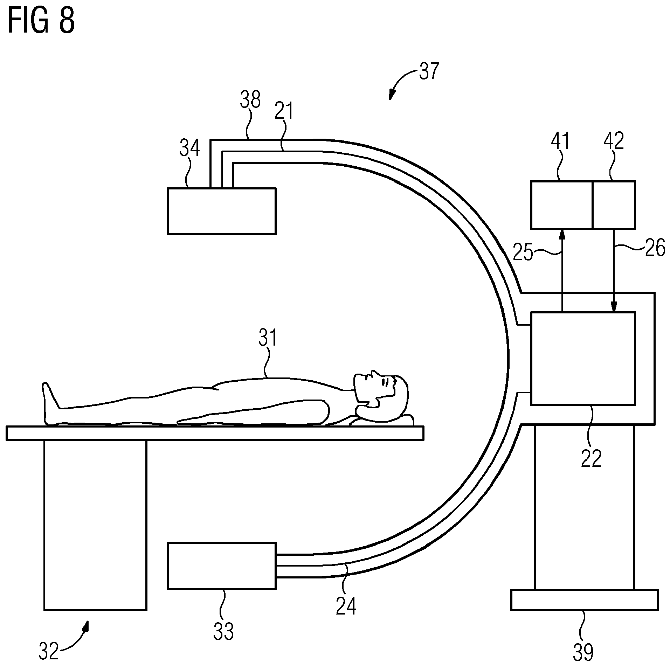

In Fig. 8 ist ein beispielhaft für ein medizinisches Bildgebungsgerät ein medizinisches C-Bogen-Röntgengerät 37 schematisch dargestellt. Vorteilhafterweise kann das medizinische C-Bogen Röntgengerät dazu ausgebildet sein, eine Ausführungsform des vorgeschlagenen computerimplementierten Verfahrens auszuführen. Hierbei umfasst das medizinische C-Bogen-Röntgengerät 37 eine Detektoreinheit 34, eine Röntgenquelle 33 und eine Verarbeitungseinheit 22. Zur Aufnahme der medizinischen Messdaten $\vec{w}$, insbesondere von Projektionsröntgenbildern, kann der Arm 38 des C-Bogen-Röntgengerätes beweglich um ein oder mehrere Achsen herum gelagert sein. Hierdurch können die medizinischen Messdaten $\vec{w}$ mit jeweils, insbesondere zueinander, verschiedenen Aufnahmeparametern, insbesondere Akquisitionsgeometrien, aufgenommen werden. Ferner kann das medizinische C-Bogen-Röntgengerät 37 eine Bewegungsvorrichtung 39 umfassen, welche eine Bewegung des C-Bogen-Röntgengerätes 37 im Raum ermöglicht.

Zur Aufnahme der medizinischen Messdaten $\vec{w}$ von einem abzubildenden Bereich eines, auf einer Patientenlagerungseinrichtung 32 angeordneten Untersuchungsobjekts 31, kann die Verarbeitungseinheit 22 ein Signal 24 an die Röntgenquelle 33 senden. Daraufhin kann die Röntgenquelle 33 ein Röntgenstrahlenbündel, insbesondere einen Kegelstrahl und/oder Fächerstrahl, aussenden. Beim Auftreffen des Röntgenstrahlenbündels nach einer Wechselwirkung mit dem abzubildenden Bereich des Untersuchungsobjekts 31 auf einer Oberfläche der Detektoreinheit 34, kann die Detektoreinheit 34 ein Signal 21 an die Verarbeitungseinheit 22 senden. Die Verarbeitungseinheit 22 kann beispielsweise anhand des Signals 21 die medizinischen Messdaten $\vec{w}$ empfangen. Im Anschluss kann die Verarbeitungseinheit 22 eine Ausführungsform des vorgeschlagenen computerimplementierten Verfahrens zur Rekonstruktion von medizinischen Bilddaten $\vec{r}$ ausführen.

Des Weiteren kann das medizinische C-Bogen-Röntgengerät 37 eine Eingabeeinheit 42, beispielsweise eine Tastatur, und/ oder eine Darstellungseinheit 41, beispielsweise ein Monitor und/oder Display, umfassen. Die Eingabeeinheit 42 kann vorzugsweise in die Darstellungseinheit 41 integriert sein, beispielsweise bei einem kapazitiven Eingabedisplay. Dabei kann durch eine Eingabe eines Bedienpersonals an der Eingabeeinheit 42 eine Steuerung des vorgeschlagenen Verfahrens und/oder des medizinischen C-Bogen-Röntgengeräts 37 ermöglicht werden. Beispielsweise kann eine graphische Darstellung der rekonstruierten medizinischen Bilddaten $\vec{r}$ und/oder des Kostenwertes $\varepsilon$ und/oder die Rekonstruktionsparameter $\vec{p}$ auf der Darstellungseinheit 41 angezeigt werden.

Die in den beschriebenen Figuren enthaltenen schematischen Darstellungen bilden keinerlei Maßstab oder Größenverhältnis ab.

Es wird abschließend noch einmal darauf hingewiesen, dass es sich bei den vorhergehend detailliert beschriebenen Verfahren sowie bei den dargestellten Vorrichtungen lediglich um Ausführungsbeispiele handelt, welche vom Fachmann in verschiedenster Weise modifiziert werden können, ohne den Bereich der Erfindung zu verlassen. Weiterhin schließt die Verwendung der unbestimmten Artikel "ein" bzw. "eine" nicht aus, dass die betreffenden Merkmale auch mehrfach vorhanden sein können. Ebenso schließen die Begriffe "Einheit" und "Element" nicht aus, dass die betreffenden Komponenten aus mehreren zusammenwirkenden Teil-Komponenten bestehen, die gegebenenfalls auch räumlich verteilt sein können.

**Patentansprüche**

1. Computerimplementiertes Verfahren zur Rekonstruktion von medizinischen Bilddaten ($\vec{r}$), umfassend:

   - Empfangen der medizinischen Messdaten ($\vec{w}$),
   - Minimieren eines Kostenwertes ($\varepsilon$) durch Gradientenabstieg umfassend die Schritte a) bis e):

     a) Rekonstruieren der medizinischen Bilddaten ($\vec{r}$) mehrere Bildwerte ($r_i$) umfassend durch Anwendung einer Rekonstruktionsfunktion (g) auf die empfangenen medizinischen Messdaten ($\vec{w}$) gemäß Rekonstruktionsparametern ($\vec{p}$),
     b) Bestimmen eines Kostenwertes ($\varepsilon$) durch Anwendung einer Kostenfunktion (f) auf die rekonstruierten medizinischen Bilddaten ($\vec{r}$),

       wobei die Kostenfunktion (f) eine trainierte Funktion (TF) umfasst und auf einer Bildqualitätsmetrik (BQM) basiert,
       wobei der Kostenwert ($\varepsilon$) durch Anwendung der trainierten Funktion (TF) auf Eingabedaten bestimmt wird, wobei die Eingabedaten auf den rekonstruierten medizinischen Bilddaten ($\vec{r}$) mehrere Bildwerte ($r_i$) umfassend basieren,
       wobei zumindest ein Parameter der trainierten Funktion (TF) auf der Bildqualitätsmetrik (BQM) basiert,

     c) Bestimmen eines Gradienten der Kostenfunktion ($\vec{\nabla}f$) bezüglich der Rekonstruktionsparameter ($\vec{p}$),
     d) Anpassen der Rekonstruktionsparameter ($\vec{p}$) basierend auf

       - dem Gradienten der Kostenfunktion ($\vec{\nabla}f$) bezüglich der Rekonstruktionsparameter ($\vec{p}$) und
       - den bisherigen Rekonstruktionsparametern ($\vec{p}$),

     e) Bereitstellen (2) der angepassten Rekonstruktionsparameter ($\vec{p}'$),

   wobei die Schritte a) bis e) bis zum Eintreten einer Abbruchbedingung (A) wiederholt werden,

   - Bereitstellen (3) der rekonstruierten medizinischen Bilddaten ($\vec{r}$).

2. Computerimplementiertes Verfahren nach Anspruch 1, **dadurch gekennzeichnet, dass** die Abbruchbedingung (A) eine maximale Anzahl von Wiederholungen und/oder einen Schwellwert bezüglich des Kostenwertes ($\varepsilon$) umfasst.

3. Computerimplementiertes Verfahren nach Anspruch 1 oder 2, **dadurch gekennzeichnet, dass** die Minimierung des Kostenwertes ($\varepsilon$) durch Gradientenabstieg weiterhin umfasst:

   b2) Bestimmen zumindest eines Konsistenzwerts (k) durch Anwendung einer Konsistenzfunktion h auf die medizinischen Messdaten ($\vec{w}$) gemäß Rekonstruktionsparametern ($\vec{p}$),
   c2) Bestimmen eines Gradienten der Konsistenzfunktion ($\vec{\nabla}h$) bezüglich der Rekonstruktionsparameter ($\vec{p}$),

   wobei Schritt d) weiterhin umfasst:

   - Anpassen der Rekonstruktionsparameter ($\vec{p}$) zusätzlich basierend auf dem Gradienten der Konsistenzfunktion ($\vec{\nabla}h$) bezüglich der Rekonstruktionsparameter ($\vec{p}$).

4. Computerimplementiertes Verfahren nach Anspruch 3, **dadurch gekennzeichnet, dass** die Konsistenzfunktion (h) eine Konsistenzmetrik umfasst.

5. Computerimplementiertes Verfahren nach einem der vorangehenden Ansprüche, **dadurch gekennzeichnet, dass** Schritt c) weiterhin umfasst:

   - Bestimmen von partiellen Ableitungen der Rekonstruktionsfunktion (g) bezüglich der Rekonstruktionsparameter ($\vec{p}$) und
   - Bestimmen von partiellen Ableitungen der Kostenfunktion (f) bezüglich der Bildwerte ($r_i$) der rekonstruierten medizinischen Bilddaten ($\vec{r}$).

**6.** Computerimplementiertes Verfahren nach Anspruch 5, wobei die Bestimmung der partiellen Ableitungen der Kostenfunktion (f) bezüglich der Bildwerte ($r_i$) der rekonstruierten medizinischen Bilddaten ($\vec{r}$) mittels einer Rückpropagation der trainierten Funktion (TF) erfolgt,
wobei die Eingabedaten der Rückpropagation auf dem Kostenwert ($\varepsilon$) basieren.

**7.** Computerimplementiertes Verfahren nach einem der vorangehenden Ansprüche, wobei die Rekonstruktion im Schritt a) weiterhin umfasst:

- Erzeugen von korrigierten Rekonstruktionsparametern ($\vec{\vec{p}}$) durch Anwenden einer Korrekturfunktion (1) auf die Rekonstruktionsparameter ($\vec{p}$),

- Bereitstellen (4) der korrigierten Rekonstruktionsparameter ($\vec{\vec{p}}$) als Rekonstruktionsparameter ($\vec{p}$) für die Rekonstruktionsfunktion (g) in Schritt a).

**8.** Computerprogramm, welches die Verfahrensschritte eines Verfahrens nach einem der Ansprüche 1 bis 7 kodiert und zum Laden in einen Datenspeicher einer Verarbeitungseinheit (22) eines medizinischen Bildgebungsgeräts (37) zum Ausführen der Verfahrensschritte eingerichtet ist.

**9.** Datenspeicher für eine Verarbeitungseinheit (22) eines medizinischen Bildgebungsgeräts (37), wobei in dem Datenspeicher ein Programmcode gespeichert ist, welcher zumindest ein Computerprogramm nach Anspruch 8 umfasst.

**10.** Medizinisches Bildgebungsgerät (37) umfassend eine Verarbeitungseinheit (22), welche zur Ausführung eines Verfahrens nach einem der Ansprüche 1 bis 7 ausgebildet ist.

**Claims**

**1.** Computer-implemented method for the reconstruction of medical image data ($\vec{r}$), comprising:

- receiving the medical measuring data ($\vec{w}$),
- minimising a cost value ($\varepsilon$) as a result of a drop in gradient comprising the steps a) to e):

a) reconstructing the medical image data ($\vec{r}$) comprising a number of image values ($r_i$) by applying a reconstruction function (g) to the received medical measuring data ($\vec{w}$) in accordance with reconstruction parameters ($\vec{p}$),
b) determining a cost value ($\varepsilon$) by applying a cost function (f) to the reconstructed medical image data ($\vec{r}$), wherein the cost function (f) comprises a trained function (TF) and is based on an image quality metric (BQM),

wherein the cost value ($\varepsilon$) is determined by applying the trained function (TF) to input data, wherein the input data is based on the reconstructed medical image data ($\vec{r}$) comprising a number of image values ($r_i$), wherein at least one parameter of the trained function (TF) is based on the image quality metric (BQM),

c) determining a gradient of the cost function ($\vec{\nabla}f$) with respect to the reconstruction parameters ($\vec{p}$),
d) adjusting the reconstruction parameters ($\vec{p}$) on the basis of

- the gradient of the cost function ($\vec{\nabla}f$) with respect to the reconstruction parameters ($\vec{p}$) and
- the previous reconstruction parameters ($\vec{p}$),

e) providing (2) the adjusted reconstruction parameters ($\vec{p}'$),

wherein the steps a) to e) are repeated until a termination condition (A) is met,

- providing (3) the reconstructed medical image data ($\vec{r}$).

**2.** Computer-implemented method according to claim 1, **characterised in that** the termination condition (A) comprises a maximum number of repetitions and/or a threshold value with respect to the cost value ($\varepsilon$).

3. Computer-implemented method according to claim 1 or 2, **characterised in that**
   the minimization of the cost value ($\varepsilon$) as a result of a drop in gradient further comprises:

   b2) determining at least one consistency value ($k$) by applying a consistency function h to the medical measuring data ($\vec{w}$) in accordance with reconstruction parameters ($\vec{p}$),
   c2) determining a gradient of the consistency function ($\vec{\nabla}h$) with respect to the reconstruction parameters ($\vec{p}$),
   wherein step d) further comprises:

   - adjusting the reconstruction parameters ($\vec{p}$) additionally on the basis of the gradient of the consistency function ($\vec{\nabla}h$) with respect to the reconstruction parameters ($\vec{p}$).

4. Computer-implemented method according to claim 3, **characterised in that** the consistency function (h) comprises a consistency metric.

5. Computer-implemented method according to one of the preceding claims, **characterised in that** step c) further comprises:

   - determining partial derivatives of the reconstruction function (g) with respect to the reconstruction parameters ($\vec{p}$) and
   - determining partial derivatives of the cost function (f) with respect to the image values ($r_i$) of the reconstructed medical image data ($\vec{r}$).

6. Computer-implemented method according to claim 5, wherein the determination of the partial derivatives of the cost function (f) with respect to the image values ($r_i$) of the reconstructed medical image data ($\vec{r}$) takes place by means of a back propagation of the trained function (TF),
   wherein the input data of the back propagation is based on the cost value ($\varepsilon$).

7. Computer-implemented method according to one of the preceding claims, wherein the reconstruction in step a) further comprises:

   - generating corrected reconstruction parameters ($\vec{\tilde{p}}$) by applying a correction function (1) to the reconstruction parameters ($\vec{p}$),

   - providing (4) the corrected reconstruction parameters ($\vec{\tilde{p}}$) as reconstruction parameters ($\vec{p}$) for the reconstruction function (g) in step a).

8. Computer program, which encodes the method steps of a method according to one of claims 1 to 7 and is designed to be loaded into a data memory of a processing unit (22) of a medical imaging device (37) in order to implement the method steps.

9. Data memory for a processing unit (22) of a medical imaging device (37), wherein a program code which comprises at least one computer program according to claim 8 is stored in the data memory.

10. Medical imaging device (37) comprising a processing unit (22) which is embodied to implement a method according to one of claims 1 to 7.

**Revendications**

1. Procédé mis en oeuvre par ordinateur de reconstruction de données ($\vec{r}$) d'image médicales, comprenant :

   - la réception de données ($\vec{w}$) de mesure médicales,
   - la minimisation d'une valeur ($\varepsilon$) de coût par descente de gradients, comprenant les stades a) à e) :

   a) la reconstruction des données ($\vec{r}$) d'image médicales comprenant plusieurs valeurs ($r_i$) d'image par

application, suivant des paramètres ($\vec{p}$) de reconstruction, d'une fonction (g) de reconstruction aux données ($\vec{w}$) de mesure médicales reçues,

b) la détermination d'une valeur ($\varepsilon$) de coût par application d'une fonction (f) de coût aux données ($\vec{r}$) d'image médicales reconstruites,

dans lequel la fonction (f) de coût comprend une fonction (TF) d'apprentissage et repose sur une métrique (BQM) de qualité d'image,

dans lequel on détermine la valeur ($\varepsilon$) de coût par application de la fonction (TF) d'apprentissage à des données d'entrée, dans lequel les données d'entrée reposent sur les données ($\vec{r}$) d'image médicales reconstruites comprenant plusieurs valeurs ($r_i$) d'image,

dans lequel au moins un paramètre de la fonction (TF) d'apprentissage repose sur la métrique (BQM) de qualité d'image,

c) la détermination d'un gradient de la fonction ($\vec{\nabla}f$) de coût par rapport aux paramètres ($\vec{p}$) de reconstruction,

d) l'adaptation des paramètres ($\vec{p}$) de reconstruction, sur la base

- du gradient de la fonction ($\vec{\nabla}f$) de coût par rapport aux paramètres ($\vec{p}$) de reconstruction, et
- des paramètres ($\vec{p}$) de reconstruction antérieurs,

e) la mise (2) à disposition des paramètres ($\vec{p}'$) de reconstruction adaptés,

dans lequel on répète des stades a) à e), jusqu'à l'apparition d'une condition (A) d'interruption,

- la mise à disposition (3) de données ($\vec{r}$) d'image médicales reconstruites.

2. Procédé mis en oeuvre par ordinateur suivant la revendication 1, **caractérisé en ce que** la condition (A) d'interruption comprend une nombre maximum de répétitions et/ou une valeur de seuil par rapport à la valeur ($\varepsilon$) de coût.

3. Procédé mis en oeuvre par ordinateur suivant la revendication 1 ou 2, **caractérisé en ce que** la minimisation de la valeur ($\varepsilon$) de coût par descente de gradients comprend en outre :

b2) la détermination d'au moins une valeur ($k$) de cohérence par application, suivant des paramètres ($\vec{p}$) de reconstruction, d'une fonction h de cohérence aux données ($\vec{w}$) de mesure médicales,

c2) la détermination d'un gradient de la fonction ($\vec{\nabla}h$) de cohérence par rapport aux paramètres ($\vec{p}$) de reconstruction,

dans lequel le stade d) comprend en outre

- l'adaptation des paramètres ($\vec{p}$) de reconstruction reposant en outre sur le gradient de la fonction ($\vec{\nabla}h$) de cohérence par rapport aux paramètres ($\vec{p}$) de reconstruction.

4. Procédé mis en oeuvre par ordinateur suivant la revendication 3, **caractérisé en ce que** la fonction (h) de cohérence comprend une métrique de cohérence.

5. Procédé mis en oeuvre par ordinateur suivant l'une des revendications précédentes, **caractérisé en ce que** le stade c) comprend en outre

- la détermination de dérivées partielles de la fonction (g) de reconstruction par rapport aux paramètres ($\vec{p}$) de reconstruction, et
- la détermination de dérivées partielles de la fonction (f) de coût par rapport aux valeurs ($r_i$) d'image des données ($\vec{r}$) d'image médicales reconstruites.

6. Procédé mis en oeuvre par ordinateur suivant la revendication 5, dans lequel la détermination des dérivées partielles de la fonction (f) de coût par rapport aux valeurs ($r_i$) d'image des données ($\vec{r}$) d'image médicales reconstruites s'effectue au moyen d'une propagation vers l'arrière de la fonction (TF) d'apprentissage, dans lequel les données d'entrée de la propagation vers l'arrière reposent sur la valeur ($\varepsilon$) de coût.

7. Procédé mis en oeuvre par ordinateur suivant l'une des revendications précédentes, dans lequel la reconstruction dans le stade a) comprend en outre :

   - la production de paramètres ($\vec{p}$) de reconstruction corrigés par application d'une fonction (1) de correction aux paramètres ($\vec{p}$) de reconstruction,

   - la mise (4) à disposition des paramètres ($\vec{p}$) de reconstruction corrigés comme paramètres ($\vec{p}$) de reconstruction pour la fonction (g) de reconstruction dans le stade a).

8. Programme d'ordinateur, qui code les stades d'un procédé suivant l'une des revendications 1 à 7 et qui est conçu pour être chargé dans une mémoire de données de l'unité (22) de traitement d'un appareil (37) d'imagerie médicale pour la réalisation des stades du procédé.

9. Mémoire de données pour une unité (22) de traitement d'un appareil (37) d'imagerie médicale, dans laquelle il est mis, dans la mémoire de données, un code de programme, qui comprend au moins un programme d'ordinateur suivant la revendication 8.

10. Appareil (37) d'imagerie médicale comprenant une unité (22) de traitement, qui est constituée pour la réalisation d'un procédé suivant l'une des revendications 1 à 7.

# FIG 1

# FIG 2

# FIG 3

# FIG 4

FIG 5

## FIG 6

| |
|---|
| IF |
| CU |
| MU |

22

37

## FIG 7

TRS

| |
|---|
| TIF |
| TCU |
| TMU |

37

FIG 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Motion compensation in extremity cone-beam CT using a penalized image sharpness criterion. **SISNIEGA et al.** Physics in Medicine and Biology. Institute of Physics Publishing, vol. 62, 3712-3734